# EUROPEAN PATENT APPLICATION

(11) **EP 4 611 192 A1**
(43) Date of publication of application: **03.09.2025**
(21) Application number: 25154376.5
(22) Date of filing: 28.01.2025
(51) Int. Cl.: H01S 3/067, H01S 3/094, H01S 3/10, H01S 3/23, H01S 3/16

(54) **MULTI-CORE FIBER AMPLIFIER AND OPTICAL AMPLIFICATION METHOD**

(30) Priority: 01.03.2024 JP 2024030933
(71) Applicant: NEC Corporation, 108-8001 Tokyo (JP)
(72) Inventor: TAKESHITA, Hitoshi, 108-8001 TOKYO (JP)
(74) Representative: Reddie & Grose LLP

(57) **Abstract**

A multi-core fiber amplifier includes: a first optical multiplexer that couples excitation light with first signal light of a first wavelength band and second signal light of a second wavelength band, and outputs coupled light; a first amplifier that includes a rare-earth doped multi-core fiber, inputs output light from the first optical multiplexer, and amplifies and outputs the first signal light; a first optical demultiplexer that demultiplexes output light from the first amplifier into the first signal light, and the second signal light and the excitation light, and outputs demultiplexed light; a second amplifier that includes a rare-earth doped multi-core fiber , inputs the second signal light and the excitation light from the first optical demultiplexer, and amplifies and outputs the input second signal light; and a second optical multiplexer that multiplexes the first signal light from the first optical demultiplexer and the second signal light from the second amplifier.

## Description

This application is based upon and claims the benefit of priority from Japanese patent application No. 2024-030933, filed on March 1, 2024, the disclosure of which is incorporated herein in its entirety by reference.

### TECHNICAL FIELD

The present disclosure relates to a multi-core fiber amplifier and an optical amplification method.

### BACKGROUND ART

A space division multiplexing system using a multi-core fiber (MCF) is proceeding toward practical utilization. The MCF includes a plurality of cores in one optical fiber. Thus, an increase in transmission capacity of an optical transmission system can be achieved by using the MCF instead of a single core fiber (SCF). Further, a multi-core fiber amplifier (MCF amplifier) using the MCF as an excitation fiber is also known. An MCF in which erbium (Er) is added to a core is also referred to as a multi-core erbium-doped fiber (MC-EDF).

Wavelength division multiplexing signal light is usually used as signal light to be transmitted by the MCF. As a band of the wavelength division multiplexing signal light, an S-band, a C-band, and an L-band are known. A band of the S-band is approximately 1460 to 1530 nm, a band of the C-band is approximately 1530 to 1565 nm, and a band of the L-band is approximately 1565 to 1625 nm. The wavelength division multiplexing signal light is also referred to as wavelength division multiplexing (WDM) light.

In relation to the present disclosure, Patent Literature 1 (PTL 1) (International Patent Publication No. WO2022/181294) describes a multi-core EDFA (MC-EDFA) in which MC-EDFs are arranged in parallel. EDFA is an abbreviation for an Er-doped fiber amplifier. Fig. 10 is a diagram illustrating a configuration of a multi-core fiber amplifier 900 described in PTL 1. The multi-core fiber amplifier 900 includes multi-core EDFs 901 and 902, and amplifies, for each wavelength band, signal light in the C-band and signal light in the L-band that are output from a signal source 910. An optical demultiplexer 911 demultiplexes the signal light (C + L) being input from an MCF transmission path into the signal light (C) in the C-band and the signal light (L) in the L-band. The signal light in the C-band is multiplexed with excitation light (p) being output from an excitation light source 950 by an optical multiplexer 921, and multiplexed light is amplified in a multi-core EDF 901. An optical demultiplexer 912 demultiplexes the signal light in the C-band and the excitation light (residual excitation light) that are output from the multi-core EDF 901. The demultiplexed residual excitation light is multiplexed with the signal light in the L-band in an optical multiplexer 923, and multiplexed light is input to a multi-core EDF 902. The multi-core EDF 902 amplifies the signal light in the L-band by the residual excitation light. The residual excitation light is absorbed in the multi-core EDF 902. An optical multiplexer 922 multiplexes the amplified signal light in the C-band and the amplified signal light in the L-band, and outputs multiplexed light to an MCF transmission path 932.

### SUMMARY

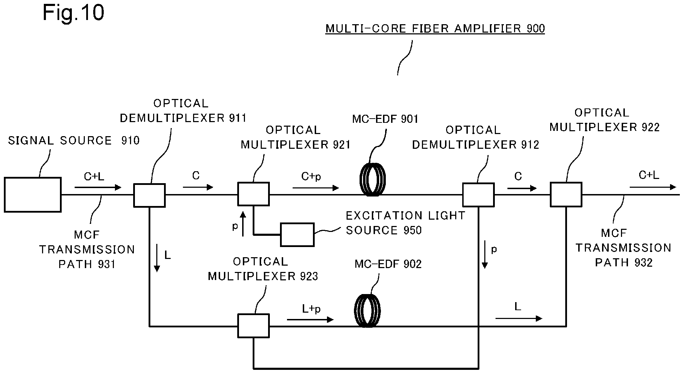

The multi-core fiber amplifier 900 illustrated in Fig. 10 excites the multi-core EDF 902 by using the residual excitation light being output from the multi-core EDF 901. Thus, the multi-core fiber amplifier 900 can excite the two MC-EDFs 901 and 902 disposed in parallel by using one excitation light source.

However, in the multi-core fiber amplifier 900, the optical demultiplexer 912 and the optical multiplexer 923 respectively demultiplexing and multiplexing the residual excitation light are essential on an output side of the multi-core EDF 901 and on an input side of the multi-core EDF 902 for supplying the residual excitation light to the multi-core EDF 902. As a result, there is a problem that a loss of the excitation light and the signal light passing through the optical demultiplexer 912 and the optical multiplexer 923 increases and efficiency (amplification efficiency or power efficiency) of the multi-core fiber amplifier 900 decreases.

The present disclosure provides a technique for improving efficiency of a multi-core optical amplifier that amplifies light beams in a plurality of wavelength bands by using an excitation light source having a single wavelength.

A multi-core fiber amplifier according to the present disclosure includes:
a first optical multiplexing means for coupling excitation light having a single wavelength and being used for amplification of signal light with first signal light being the signal light in a first wavelength band and second signal light being the signal light in a second wavelength band, and outputting coupled light;
a first amplification means including a multi-core fiber in which a rare-earth element is added, for inputting output light from the first optical multiplexing means, and amplifying and outputting at least the first signal light;
a first optical demultiplexing means for demultiplexing output light from the first amplification means into the first signal light, and the second signal light and the excitation light, and outputting demultiplexed light;
a second amplification means including a multi-core fiber in which a rare-earth element is added, for inputting the second signal light and the excitation light that are output from the first optical demultiplexing means, and amplifying and outputting the input second signal light; and
a second optical multiplexing means for multiplexing the first signal light being output from the first optical demultiplexing means and the second signal light being output from the second amplification means.

An optical amplification method according to the present disclosure includes:
by a first optical multiplexing means, coupling excitation light having a single wavelength and being used for amplification of signal light with first signal light being the signal light in a first wavelength band and second signal light being the signal light in a second wavelength band, and outputting coupled light;
inputting output light from the first optical multiplexing means to a first amplification means including a multi-core fiber in which a rare-earth element is added, and amplifying and outputting at least the first signal light;
by a first optical demultiplexing means, demultiplexing output light from the first amplification means into the first signal light, and the second signal light and the excitation light, and outputting demultiplexed light;
inputting the second signal light and the excitation light that are output from the first optical demultiplexing means to a second amplification means including a multi-core fiber in which a rare-earth element is added, and amplifying and outputting the input second signal light; and,
by a second optical multiplexing means, multiplexing the first signal light being output from the first optical demultiplexing means and the second signal light being output from the second amplification means.

A multi-core fiber amplifier and the like according to the present disclosure can improve efficiency of a multi-core optical amplifier that amplifies light beams in a plurality of wavelength bands by using an excitation light source having a single wavelength.

### BRIEF DESCRIPTION OF THE DRAWINGS

Exemplary features and advantages of the present invention will become apparent from the following detailed description when taken with the accompanying drawings in which:
Fig. 1 is a diagram illustrating a configuration example of a multi-core fiber amplifier;
Fig. 2 is a diagram illustrating a configuration example of the multi-core fiber amplifier;
Fig. 3 is a diagram illustrating a configuration example of an optical demultiplexer and an excitation light adjuster;
Fig. 4 is a diagram illustrating a configuration example of the optical demultiplexer and the excitation light adjuster;
Fig. 5 is a diagram illustrating a configuration example of the multi-core fiber amplifier;
Fig. 6 is a diagram illustrating a configuration example of the multi-core fiber amplifier;
Fig. 7 is a diagram illustrating a configuration example of the multi-core fiber amplifier;
Fig. 8 is a diagram illustrating a configuration example of the multi-core fiber amplifier;
Fig. 9 is a flowchart illustrating an example of an optical amplification method; and
Fig. 10 is a diagram illustrating a configuration of a multi-core fiber amplifier described in PTL 1.

### EXAMPLE EMBODIMENT

Hereinafter, example embodiments of the present disclosure will be described with reference to drawings. An arrow illustrated in the drawings indicates a direction of a signal and the like, and does not intend to impose limitations on properties such as a direction and a size of a signal and the like. Further, an intersection point of paths indicated by a solid line does not mean coupling of the paths unless otherwise specified. A component that has already been described may be provided with the same reference sign in the example embodiments and the drawings, and redundant description thereof may be omitted.

### (First Example Embodiment)

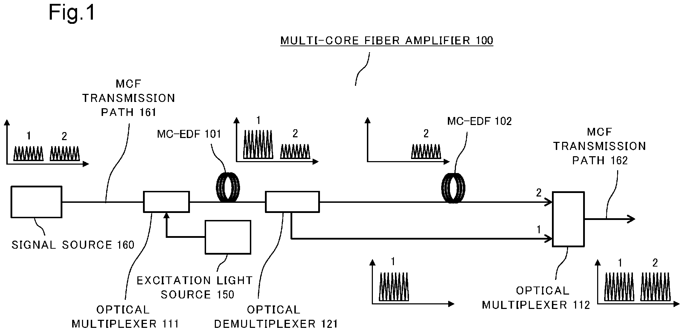

Fig. 1 is a diagram illustrating a configuration example of a multi-core fiber amplifier 100. The multi-core fiber amplifier 100 includes multi-core EDFs 101 and 102, optical multiplexers 111 and 112, an optical demultiplexer 121, and an excitation light source 150. MCF transmission paths 161 and 162 are connected to the multi-core fiber amplifier 100. The MCF transmission paths 161 and 162 are an optical transmission path formed of an MCF. The multi-core fiber amplifier 100 amplifies signal light being input from each core of the MCF transmission path 161, and outputs the signal light to the MCF transmission path 162.

The multi-core erbium-doped fibers (MC-EDFs) 101 and 102 are both an amplification medium, and amplify input light by excitation light. The multi-core EDFs 101 and 102 are an EDF in which erbium being a rare-earth element is added to each core of a multi-core fiber. The multi-core EDFs 101 and 102 can be referred to as a first amplification means and a second amplification means, respectively.

The excitation light and the signal light are input to the optical multiplexer 111. Light having a single wavelength in a band of 0.98 µm and being generated in the excitation light source 150 can be used as the excitation light. The signal light is generated in a signal source 160 such as an optical transmitter, and propagates through the MCF transmission path 161. The signal light is light in which first signal light being light in a first wavelength band and second signal light being light in a second wavelength band without overlapping the first wavelength band are wavelength-multiplexed. The optical multiplexer 111 couples the excitation light and the signal light, and inputs coupled light to the multi-core EDF 101. The multi-core EDF 101 is mainly used for amplifying the first signal light. Further, the multi-core EDF 102 is entirely used for amplifying the second signal light. In the present example embodiment and subsequent example embodiments, the first wavelength band can be set as a C-band, and the second wavelength band can be set as an L-band. Note that clad excitation can be used as an excitation method of the multi-core EDFs 101 and 102.

Note that Fig. 1 and subsequent diagrams appropriately illustrate graphs clearly illustrating a wavelength and intensity of signal light by indicating the first wavelength band as "1", the second wavelength band as "2", a wavelength in a horizontal axis, and light intensity in a vertical axis. However, in each of the graphs, light intensity in the vertical axis indicates a relative intensity difference between wavelength bands (for example, the C-band and the L-band) in the same graph, and does not strictly indicate a difference in light intensity between different graphs.

The optical demultiplexer 121 is disposed between the multi-core EDF 101 and the multi-core EDF 102. The optical demultiplexer 121 demultiplexes light output from the multi-core EDF 101 according to a wavelength band. One of the demultiplexed light beams includes the excitation light and the second signal light. The other demultiplexed light beam includes the first signal light. One of the demultiplexed light beams is output to the multi-core EDF 102. The other demultiplexed light beam is output to the optical multiplexer 112. As the optical demultiplexer 121, an optical filter that passes the excitation light and the second signal light and reflects the first signal light can be used. The optical filter may be an optical band-pass filter. In this case, a wavelength band passed through the optical filter and a wavelength band reflected by the optical filter may be opposite.

The optical multiplexer 112 multiplexes the other light beam (the first signal light) demultiplexed in the optical demultiplexer 121 and the second signal light output from the multi-core EDF 102, and outputs coupled light.

The multi-core fiber amplifier 100 having such a configuration can improve efficiency of a multi-core optical amplifier that amplifies light in a plurality of wavelength bands (i.e., a plurality of frequency bands) by using the excitation light source 150 having a single wavelength. The reason is described as follows.

In the multi-core fiber amplifier 100, the multi-core EDF 101 and the multi-core EDF 102 are connected in series via the optical demultiplexer 121. Thus, the multi-core EDFs 101 and 102 can be excited by using only excitation light having a single wavelength and being output from one excitation light source. With this configuration, an optical part (for example, the optical demultiplexer 912 and the optical multiplexer 923 illustrated in Fig. 10) for injecting excitation light into the multi-core EDF 102 is unnecessary, and amplification efficiency of the multi-core EDF 102 can be improved. Further, since the first signal light amplified in the multi-core EDF 101 is separated in the optical demultiplexer 121, the first signal light is output from the multi-core fiber amplifier 100 without suffering an unnecessary loss in the multi-core EDF 102. Therefore, the multi-core fiber amplifier 100 can improve power conversion efficiency (PCE) as the entire optical amplifier when the first signal light and the second signal light are amplified.

Note that an absorption rate of the excitation light in the multi-core EDF 101 may be equal to or less than an absorption rate of the excitation light in the multi-core EDF 102. By disposing an MC-EDF having a relatively low absorption rate of the excitation light on a prior stage, excitation light power being input to an MC-EDF on a subsequent stage can be increased, and thus an operation condition of the MC-EDF on the subsequent stage can be expanded.

### (Other Configuration of Multi-core Fiber Amplifier 100)

The effects of the multi-core fiber amplifier 100 described by using Fig. 1 can also be acquired by the following configuration. A reference sign in parentheses is the reference sign in Fig. 1. The multi-core fiber amplifier 100 includes a first amplification means (101), a second amplification means (102), a first optical multiplexing means (111), a first optical demultiplexing means (121), and a second optical demultiplexing means (112).

The first amplification means and the second amplification means both include a multi-core fiber in which a rare-earth element is added. The first optical multiplexing means couples excitation light to first signal light and second signal light, and outputs coupled light. Output light from the first optical multiplexing means is input to the first amplification means. The first amplification means inputs the output light from the first optical multiplexing means, and amplifies and outputs at least the first signal light. The first optical demultiplexing means demultiplexes the light output from the first amplification means into the "first signal light" and the "second signal light and the excitation light". The second signal light and the excitation light demultiplexed in the first optical demultiplexing means are input to the second amplification means. The second amplification means inputs the second signal light and the excitation light that are output from the first optical demultiplexing means, and amplifies and outputs the input second signal light. The second optical multiplexing means multiplexes the first signal light demultiplexed in the first optical demultiplexing means and the second signal light output from the second amplification means. Note that the signal source 160 and the excitation light source (excitation light generation means) 150 are not essential in this configuration.

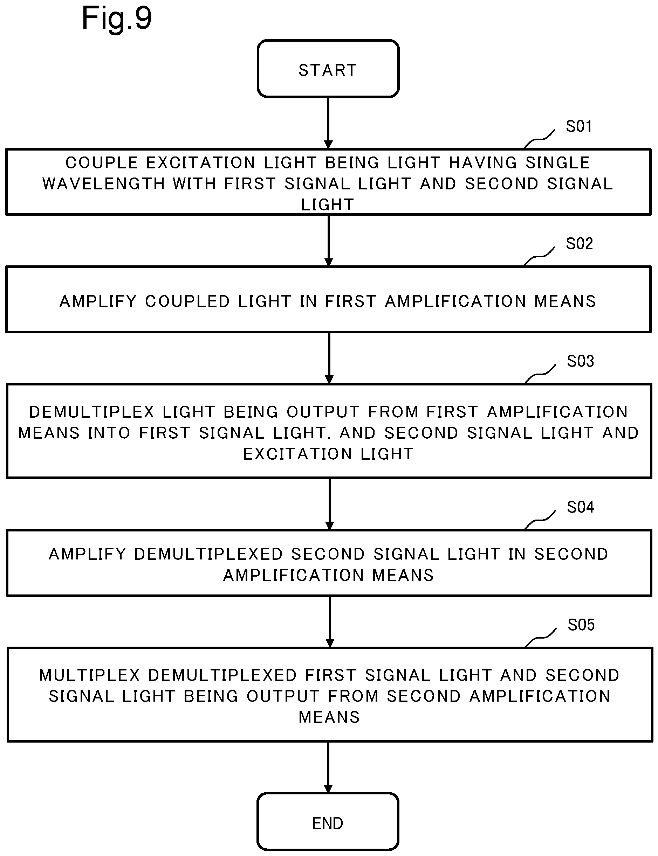

Fig. 9 is a flowchart illustrating an example of an optical amplification method in the above-described configuration. In other words, Fig. 9 is one example of the optical amplification method used in the multi-core fiber amplifier including the first amplification means including the multi-core fiber and the second amplification means including the multi-core fiber. The optical amplification method includes the following procedures. The excitation light being light having a single wavelength is coupled to the first signal light and the second signal light (step S01 in Fig. 9), and coupled light is amplified in the first amplification means (step S02). Then, the light output from the first amplification means is demultiplexed into the "first signal light" and the "second signal light and the excitation light" (step S03). Furthermore, the demultiplexed second signal light is amplified by the second amplification means (step S04), and the first signal light demultiplexed in step S03 and the second signal light output from the second amplification means are multiplexed (step S05).

### (Modification Example of First Example Embodiment)

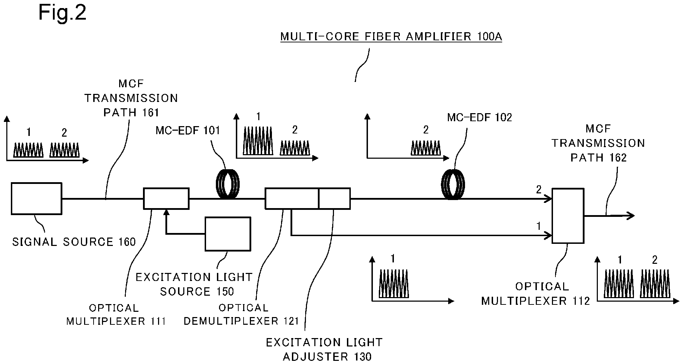

Fig. 2 is a block diagram illustrating a configuration example of a multi-core fiber amplifier 100A. The multi-core fiber amplifier 100A is different from the multi-core fiber amplifier 100 in a point that the multi-core fiber amplifier 100A includes an excitation light adjuster 130. The excitation light adjuster 130 is disposed between the optical demultiplexer 121 and the multi-core EDF 102. The excitation light adjuster 130 is one example of an excitation light adjustment means for adjusting power of the excitation light input to the multi-core EDF 102. The excitation light adjuster 130 and the optical demultiplexer 121 may be formed integrally.

The multi-core fiber amplifier 100A can adjust excitation light intensity for each wavelength band of the signal light by including the excitation light adjuster 130. For example, the multi-core fiber amplifier 100A can amplify the second signal light in the multi-core EDF 102 under a more suitable condition by adjusting intensity of the excitation light being input to the multi-core EDF 102 by using the excitation light adjuster 130.

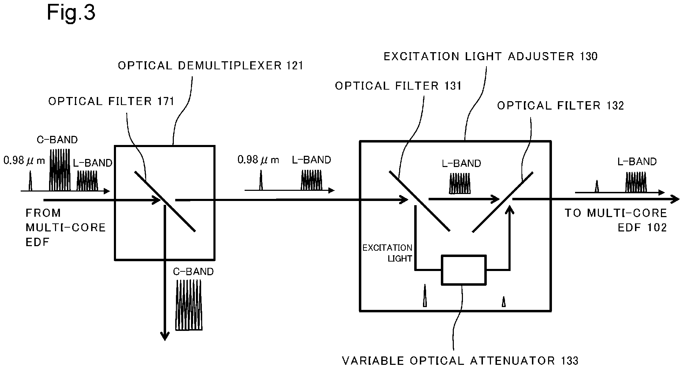

Fig. 3 is a diagram illustrating a configuration example of the optical demultiplexer 121 and the excitation light adjuster 130. The optical demultiplexer 121 includes an optical filter 171. The optical filter 171 demultiplexes light input from the multi-core EDF 101 into the excitation light (in a band of 0.98 µm), light in the second wavelength band (L-band), and light in the first wavelength band (C-band). The excitation light and the second signal light are output to the multi-core EDF 102 via the excitation light adjuster 130.

The excitation light adjuster 130 includes optical filters 131 and 132 and a variable optical attenuator (VOA) 133. The optical filter 131 demultiplexes the light input from the optical demultiplexer 121 into the excitation light and the second signal light. The second signal light passes through the optical filters 131 and 132 and is output to the multi-core EDF 102. The excitation light is output from the optical filter 131 to the variable optical attenuator 133. The variable optical attenuator 133 attenuates power of the input excitation light. The excitation light output from the variable optical attenuator 133 is multiplexed to the second signal light in the optical filter 132, and is input to the multi-core EDF 102. An attenuation amount of the excitation light in the variable optical attenuator 133 may be controlled by an electric signal from the outside of the multi-core fiber amplifier 100A.

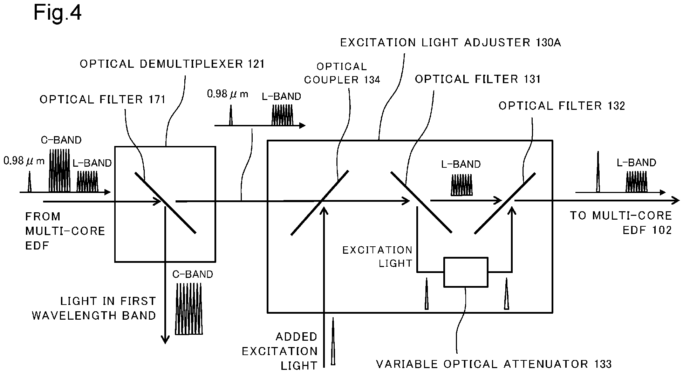

Fig. 4 is a diagram illustrating a configuration example of the optical demultiplexer 121 and an excitation light adjuster 130A. The excitation light adjuster 130A can be used instead of the excitation light adjuster 130. The excitation light adjuster 130A includes an optical coupler 134 in addition to the optical filters 131 and 132 and the variable optical attenuator 133. The optical coupler 134 couples the light input from the optical demultiplexer 121 and the excitation light. The excitation light adjuster 130A can increase power of the excitation light input to the multi-core EDF 102 by including the optical coupler 134. For example, when the power of the excitation light that excites the multi-core EDF 102 is insufficient, the excitation light adjuster 130A can increase the power of the excitation light input to the multi-core EDF 102 by adding excitation light from the outside. Note that the optical coupler 134 is, for example, an optical directional coupler or a polarization synthesis coupler, and can be referred to as a third optical multiplexing means.

In this way, the excitation light adjusters 130 and 130A can be used for adjusting the power of the excitation light output to the multi-core EDF connected to a subsequent stage thereof. Note that, also in the subsequent example embodiments, the power of the excitation light input to the MC-EDF disposed on a subsequent stage of the excitation light adjuster 130 can be adjusted by disposing the excitation light adjuster 130 between the MC-EDFs.

### (Second Example Embodiment)

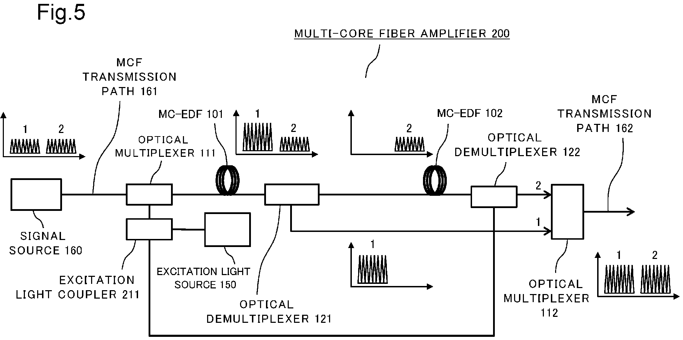

Fig. 5 is a diagram illustrating a configuration example of a multi-core fiber amplifier 200. The multi-core fiber amplifier 200 is different from the multi-core fiber amplifier 100 in a point that the multi-core fiber amplifier 200 includes an optical demultiplexer 122 and an excitation light coupler 211.

Excitation light and second signal light that are output from a multi-core EDF 102 are input to the optical demultiplexer 122. The optical demultiplexer 122 demultiplexes the input light into the excitation light and the second signal light. The optical demultiplexer 122 is, for example, an optical filter. The second signal light demultiplexed in the optical demultiplexer 122 is output to an optical multiplexer 112. The optical multiplexer 112 multiplexes first signal light output from an optical demultiplexer 121 and the second signal light output from the optical demultiplexer 122, and outputs coupled light to an MCF transmission path 162. Meanwhile, the excitation light demultiplexed in the optical demultiplexer 122 is output to the excitation light coupler 211. The optical demultiplexer 122 can be referred to as a second optical demultiplexing means for demultiplexing the second signal light and the excitation light that are output from the multi-core EDF 102, and inputting the demultiplexed second signal light to the second optical multiplexing means.

The excitation light coupler 211 couples the excitation light demultiplexed in the optical demultiplexer 122 and the excitation light output from an excitation light source 150. The excitation light coupled in the excitation light coupler 211 is output to an optical multiplexer 111. The excitation light coupler 211 is, for example, an optical directional coupler or a polarization synthesis coupler, which is not limited thereto. The optical multiplexer 111 multiplexes the excitation light coupled in the excitation light coupler 211 and the signal light, and outputs multiplexed light to a multi-core EDF 101. The excitation light coupler 211 can be referred to as an excitation light coupling means for coupling the excitation light demultiplexed in the optical demultiplexer 122 and the excitation light output from the excitation light source 150.

In the operation of the multi-core fiber amplifier 200, the optical demultiplexer 122 and the excitation light coupler 211 are not essential. However, the multi-core fiber amplifier 200 can efficiently use the excitation light by including the optical demultiplexer 122 and the excitation light coupler 211. The reason is that, by inputting the excitation light (residual excitation light) output from the multi-core EDF 102 to the multi-core EDF 101 again, the excitation light can be reused (recycled).

### (Third Example Embodiment)

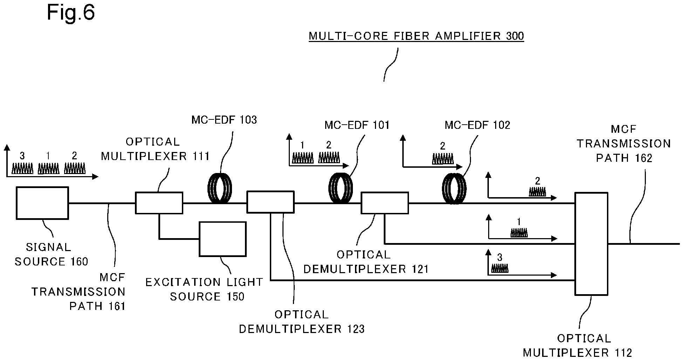

Fig. 6 is a diagram illustrating a configuration example of a multi-core fiber amplifier 300. The multi-core fiber amplifier 300 is different from the multi-core fiber amplifier 100 in a point that the multi-core fiber amplifier 300 has a configuration for amplifying third signal light being signal light in a third wavelength band. The third wavelength band is, for example, an S-band. Specifically, the multi-core fiber amplifier 300 includes a multi-core EDF 103 and an optical demultiplexer 123.

The multi-core EDF 103 and the optical demultiplexer 123 are disposed in series between an optical multiplexer 111 and a multi-core EDF 101. The multi-core EDF 103 is disposed between the optical multiplexer 111 and the optical demultiplexer 123, and the optical demultiplexer 123 is disposed between the multi-core EDF 103 and the multi-core EDF 101.

Excitation light and signal light are input to the optical multiplexer 111. The excitation light is, for example, light having a single wavelength in a band of 0.98 µm. In the present example embodiment, the signal light is light in which first signal light, second signal light, and the third signal light are wavelength-multiplexed. The optical multiplexer 111 couples the excitation light and the signal light, and inputs coupled light to the multi-core EDF 103. The excitation light may be generated in an excitation light source 150.

The multi-core EDF 103 is an amplification medium, and amplifies input light by the excitation light. The multi-core EDF 103 illustrated in Fig. 6 is an MC-EDF in which erbium is added to each core of a multi-core fiber, and is disposed on a prior stage of the multi-core EDF 101. The multi-core EDF 103 can be referred to as a third amplification means having a function of amplifying the signal light by the excitation light. The multi-core EDF 103 mainly amplifies the third signal light. An absorption rate of the excitation light in the multi-core EDF 103 may be equal to or less than an absorption rate of the excitation light in the multi-core EDF 101. By not setting an absorption rate of the excitation light of the MC-EDF (multi-core EDF 103) on a prior stage high (for example, the absorption rate is set equal to or less than an absorption rate of the excitation light of the MC-EDF on a subsequent stage), excitation light power being input to the multi-core EDF 101 and a multi-core EDF 102 on a subsequent stage can be increased.

The optical demultiplexer 123 is disposed between the multi-core EDF 103 and the multi-core EDF 101. The light output from the multi-core EDF 103 is input to the optical demultiplexer 123. The optical demultiplexer 123 demultiplexes the input light into two light beams. One of the demultiplexed light beams includes the first signal light, the second signal light, and the excitation light. The other demultiplexed light beam includes the third signal light. One of the demultiplexed light beams is output to the multi-core EDF 101. The other demultiplexed light beam is output to an optical multiplexer 112. As the optical demultiplexer 123, an optical filter that passes the excitation light, the first signal light, and the second signal light and reflects the third signal light can be used. The optical filter may be an optical band-pass filter. Further, a wavelength band passed through the optical filter and a wavelength band reflected by the optical filter may be opposite. The optical demultiplexer 123 can be referred to as a third optical demultiplexing means for demultiplexing the light output from the multi-core EDF 103 into the "light including the first signal light, the second signal light, and the excitation light" and the "third signal light included in the signal light". Note that a configuration and a function of a subsequent stage of the multi-core EDF 101 are similar to those in the first example embodiment, and thus the description will be omitted.

In the present example embodiment, the optical multiplexer 112 multiplexes the third signal light output from the optical demultiplexer 123 in addition to the first signal light output from the optical demultiplexer 121 and the second signal light output from the multi-core EDF 102. Then, the optical multiplexer 112 outputs multiplexed light to an MCF transmission path 162.

The multi-core fiber amplifier 300 having such a configuration can improve efficiency of a multi-core optical amplifier that amplifies a plurality of signal light beams by using the excitation light source 150 having a single wavelength. The multi-core fiber amplifier 300 includes the three MC-EDFs, and can thus amplify signal light beams in three different wavelength bands by using the amplification medium having a suitable length for each of the signal light beams. Further, by setting each parameter (for example, each length) of the multi-core EDFs 101 to 103 to be suitable for amplification in a C-band, an L-band, and an S-band, the multi-core fiber amplifier 300 can efficiently amplify the signal light beams in the three wavelength bands by using one excitation light beam having a single wavelength.

### (First Modification Example of Third Example Embodiment)

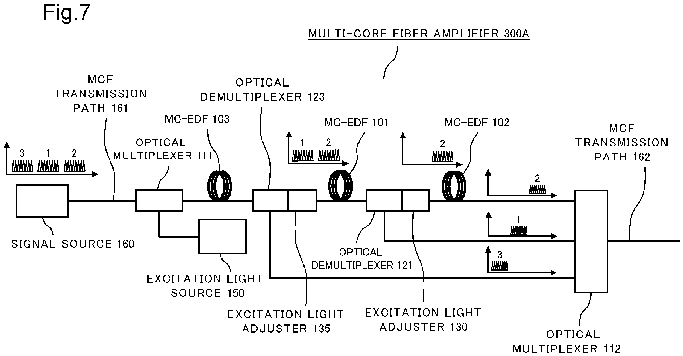

Fig. 7 is a diagram illustrating a configuration example of a multi-core fiber amplifier 300A. The multi-core fiber amplifier 300A is different from the multi-core fiber amplifier 300 illustrated in Fig. 6 in a point that the multi-core fiber amplifier 300A includes excitation light adjusters 130 and 135. A configuration of the excitation light adjuster 135 is basically similar to that of the excitation light adjuster 130, and has a function of adjusting only power of the excitation light. However, in the excitation light adjuster 135, a pass band of optical filters 131 and 132 is set in such a way that light in a first wavelength band and light in a second wavelength band propagate through an optical path without passing through a variable optical attenuator 133. Further, in the multi-core fiber amplifier 300A, the excitation light adjusters 130 and 135 may have the configuration of the excitation light adjuster 130A that can add the excitation light.

The multi-core fiber amplifier 300A having such a configuration can adjust excitation light power in an input of each of the multi-core EDF 101 and the multi-core EDF 102. As a result, the multi-core fiber amplifier 300A can individually control each amplification property of the multi-core EDFs 102 and 103.

### (Second Modification Example of Third Example Embodiment)

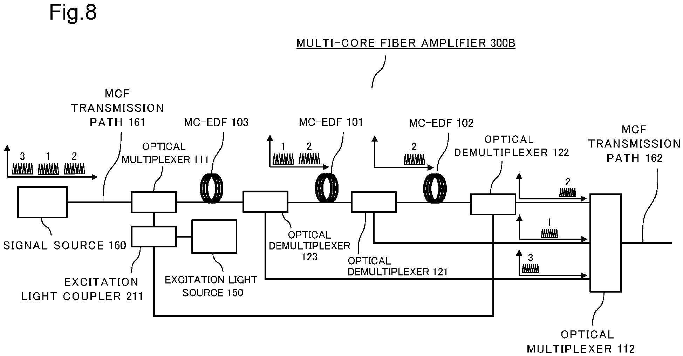

Fig. 8 is a diagram illustrating a configuration example of a multi-core fiber amplifier 300B. The multi-core fiber amplifier 300B is different from the multi-core fiber amplifier 300 illustrated in Fig. 6 in a point that the multi-core fiber amplifier 300B includes an optical demultiplexer 122 and an excitation light coupler 211. A configuration of the optical demultiplexer 122 and the excitation light coupler 211 is similar to that in the multi-core fiber amplifier 200 described in Fig. 5. In other words, the multi-core fiber amplifier 300B is acquired by applying the configuration of the multi-core fiber amplifier 200 to the multi-core fiber amplifier 300.

In the multi-core fiber amplifier 300B, the excitation light and the second signal light that are output from the multi-core EDF 102 are input to the optical demultiplexer 122. The optical demultiplexer 122 demultiplexes the input light into the excitation light and the second signal light, and outputs the second signal light to the optical multiplexer 112. Further, the optical demultiplexer 122 outputs the excitation light to the excitation light coupler 211.

The excitation light coupler 211 couples the excitation light demultiplexed in the optical demultiplexer 122 and the excitation light output from the excitation light source 150. The excitation light coupled in the excitation light coupler 211 is output to the optical multiplexer 111. The optical multiplexer 111 multiplexes the excitation light coupled in the excitation light coupler 211 and the signal light, and outputs multiplexed light to the multi-core EDF 103.

The multi-core fiber amplifier 300B having such a configuration can efficiently use the excitation light, similarly to the multi-core fiber amplifier 200. The reason is that, by inputting the excitation light output from the multi-core EDF 102 to the multi-core EDF 103 again, the excitation light can be reused (recycled).

Note that the configuration of the multi-core fiber amplifier 300A and the multi-core fiber amplifier 300B is not exclusive. In other words, the multi-core fiber amplifier 300 may have a configuration also including the optical demultiplexer 122 and the excitation light coupler 211 in Fig. 8 in addition to the excitation light adjusters 130 and 135 in Fig. 7. With such a configuration, the effects of both the multi-core fiber amplifiers 300A and 300B can be acquired.

Note that the example embodiments of the present disclosure may also be described as supplementary notes below, which is not limited thereto.

### (Supplementary Note 1)

A multi-core fiber amplifier including:
a first optical multiplexing means for coupling excitation light having a single wavelength and being used for amplification of signal light with first signal light being the signal light in a first wavelength band and second signal light being the signal light in a second wavelength band, and outputting coupled light;
a first amplification means including a multi-core fiber in which a rare-earth element is added, for inputting output light from the first optical multiplexing means, and amplifying and outputting at least the first signal light;
a first optical demultiplexing means for demultiplexing output light from the first amplification means into the first signal light, and the second signal light and the excitation light, and outputting demultiplexed light;
a second amplification means including a multi-core fiber in which a rare-earth element is added, for inputting the second signal light and the excitation light that are output from the first optical demultiplexing means, and amplifying and outputting the input second signal light; and
a second optical multiplexing means for multiplexing the first signal light being output from the first optical demultiplexing means and the second signal light being output from the second amplification means.

### (Supplementary Note 2)

The multi-core fiber amplifier according to supplementary note 1, wherein
an absorption rate of the excitation light in the first amplification means is equal to or less than an absorption rate of the excitation light in the second amplification means.

### (Supplementary Note 3)

The multi-core fiber amplifier according to supplementary note 1 or 2, wherein
the first wavelength band is a C-band, and the second wavelength band is an L-band.

### (Supplementary Note 4)

The multi-core fiber amplifier according to any one of supplementary notes 1 to 3, further including
an excitation light adjustment means for adjusting intensity of the excitation light being input to the second amplification means.

### (Supplementary Note 5)

The multi-core fiber amplifier according to supplementary note 4, wherein
the excitation light adjustment means includes an optical attenuator that attenuates power of the excitation light.

### (Supplementary Note 6)

The multi-core fiber amplifier according to supplementary note 4 or 5, wherein
the excitation light adjustment means includes a third optical multiplexing means for inputting the excitation light to the second amplification means.

### (Supplementary Note 7)

The multi-core fiber amplifier according to any one of supplementary notes 1 to 6, further including
an excitation light generation means for generating the excitation light, and inputting the excitation light to the first optical multiplexing means.

### (Supplementary Note 8)

The multi-core fiber amplifier according to supplementary note 7, further including:
a second optical demultiplexing means for demultiplexing the second signal light and the excitation light that are output from the second amplification means, and inputting the demultiplexed second signal light to the second optical multiplexing means; and
an excitation light coupling means for coupling the excitation light demultiplexed in the second optical demultiplexing means and the excitation light being output from the excitation light generation means.

### (Supplementary Note 9)

The multi-core fiber amplifier according to any one of supplementary notes 1 to 8, further including:
a third amplification means including a multi-core fiber in which a rare-earth element is added, for amplifying third signal light being the signal light in a third wavelength band; and
a third optical demultiplexing means for demultiplexing light being output from the third amplification means into light including the first signal light, the second signal light, and the excitation light, and the third signal light, wherein
the third amplification means and the third optical demultiplexing means are disposed between the first optical multiplexing means and the first amplification means, and
the first optical multiplexing means couples the excitation light with the first signal light, the second signal light, and the third signal light, and outputs coupled light.

### (Supplementary Note 10)

The multi-core fiber amplifier according to supplementary note 9, wherein
an absorption rate of the excitation light in the third amplification means is equal to or less than an absorption rate of the excitation light in the first amplification means.

### (Supplementary Note 11)

The multi-core fiber amplifier according to supplementary note 9 or 10, wherein
the third wavelength band is an S-band.

### (Supplementary Note 12)

An optical amplification method including:
by a first optical multiplexing means, coupling excitation light having a single wavelength and being used for amplification of signal light with first signal light being the signal light in a first wavelength band and second signal light being the signal light in a second wavelength band, and outputting coupled light;
inputting output light from the first optical multiplexing means to a first amplification means including a multi-core fiber in which a rare-earth element is added, and amplifying and outputting at least the first signal light;
by a first optical demultiplexing means, demultiplexing output light from the first amplification means into the first signal light, and the second signal light and the excitation light, and outputting demultiplexed light;
inputting the second signal light and the excitation light that are output from the first optical demultiplexing means to a second amplification means including a multi-core fiber in which a rare-earth element is added, and amplifying and outputting the input second signal light; and,
by a second optical multiplexing means, multiplexing the first signal light being output from the first optical demultiplexing means and the second signal light being output from the second amplification means.

### (Supplementary Note 13)

The optical amplification method according to supplementary note 12, wherein
an absorption rate of the excitation light in the first amplification means is equal to or less than an absorption rate of the excitation light in the second amplification means.

### (Supplementary Note 14)

The optical amplification method according to supplementary note 12 or 13, wherein
the first wavelength band is a C-band, and the second wavelength band is an L-band.

### (Supplementary Note 15)

The optical amplification method according to any one of supplementary notes 12 to 14, further including
adjusting intensity of the excitation light being input to the second amplification means.

### (Supplementary Note 16)

The optical amplification method according to supplementary note 15, further including
attenuating power of the excitation light by an optical attenuator.

### (Supplementary Note 17)

The optical amplification method according to supplementary note 15 or 16, further including
inputting the excitation light to the second amplification means. (Supplementary Note 18)

The optical amplification method according to any one of supplementary notes 12 to 17, further including
generating the excitation light, and inputting the excitation light to the first optical multiplexing means.

### (Supplementary Note 19)

The optical amplification method according to supplementary note 18, further including:
by a second optical demultiplexing means, demultiplexing the second signal light and the excitation light that are output from the second amplification means;
inputting the demultiplexed second signal light to the second optical multiplexing means; and
coupling the demultiplexed excitation light and the excitation light.

### (Supplementary Note 20)

The optical amplification method according to any one of supplementary notes 12 to 19, further including:
disposing a third amplification means including a multi-core fiber in which a rare-earth element is added, and a third optical demultiplexing means, between the first optical multiplexing means and the first amplification means;
coupling, by the first optical multiplexing means, the excitation light with the first signal light, the second signal light, and third signal light being the signal light in a third wavelength band, and inputting coupled light to the third amplification means;
amplifying, by the third amplification means, at least the third signal light being the signal light in the third wavelength band; and
demultiplexing, by the third optical demultiplexing means, light being output from the third amplification means into light including the first signal light, the second signal light, and the excitation light, and the third signal light.

### (Supplementary Note 21)

The optical amplification method according to supplementary note 20, wherein
an absorption rate of the excitation light in the third amplification means is equal to or less than an absorption rate of the excitation light in the first amplification means.

### (Supplementary Note 22)

The optical amplification method according to supplementary note 20 or 21, wherein
the third wavelength band is an S-band.

While the invention has been shown and described with reference to exemplary embodiments thereof, the invention is not limited to these embodiments. It will be understood by those of ordinary skill in the art that various changes in form and details may be made therein without departing from the spirit and scope of the present invention as defined by the claims. For example, the description of the multi-core fiber amplifier in each of the example embodiments also discloses a configuration of an optical transmission system including the multi-core fiber amplifier and a signal source, an optical transmitter, an optical receiver, and an optical transceiver being connected to the multi-core fiber amplifier, and an optical amplification method in the multi-core fiber amplifier.

Further, the configuration described in each of the example embodiments is not necessarily exclusive. The action and effects of the present disclosure may be achieved by a configuration combining the whole or a part of the above-mentioned example embodiments.

## Claims

1. A multi-core fiber amplifier (100) comprising:
first optical multiplexing means (111) for coupling excitation light having a single wavelength and being used for amplification of signal light with first signal light being the signal light in a first wavelength band and second signal light being the signal light in a second wavelength band, and outputting coupled light;
first amplification means (101) including a multi-core fiber in which a rare-earth element is added, for inputting output light from the first optical multiplexing means (111), and amplifying and outputting at least the first signal light;
first optical demultiplexing means (121) for demultiplexing output light from the first amplification means (101) into the first signal light, and the second signal light and the excitation light, and outputting demultiplexed light;
second amplification means (102) including a multi-core fiber in which a rare-earth element is added, for inputting the second signal light and the excitation light that are output from the first optical demultiplexing means (121), and amplifying and outputting the input second signal light; and
second optical multiplexing means (112) for multiplexing the first signal light being output from the first optical demultiplexing means (121) and the second signal light being output from the second amplification means (102).

2. The multi-core fiber amplifier according to claim 1, wherein
an absorption rate of the excitation light in the first amplification means is equal to or less than an absorption rate of the excitation light in the second amplification means.

3. The multi-core fiber amplifier according to claim 1 or 2, wherein
the first wavelength band is a C-band, and the second wavelength band is an L-band.

4. The multi-core fiber amplifier according to claim 1 or 2, further comprising
excitation light adjustment means for adjusting intensity of the excitation light being input to the second amplification means.

5. The multi-core fiber amplifier according to claim 4, wherein
the excitation light adjustment means includes an optical attenuator that attenuates power of the excitation light.

6. The multi-core fiber amplifier according to claim 4, wherein
the excitation light adjustment means includes third optical multiplexing means for inputting the excitation light to the second amplification means.

7. The multi-core fiber amplifier according to claim 1 or 2, further comprising
excitation light generation means for generating the excitation light, and inputting the excitation light to the first optical multiplexing means.

8. The multi-core fiber amplifier according to claim 7, further comprising:
second optical demultiplexing means for demultiplexing the second signal light and the excitation light that are output from the second amplification means, and inputting the demultiplexed second signal light to the second optical multiplexing means; and
excitation light coupling means for coupling the excitation light demultiplexed in the second optical demultiplexing means and the excitation light being output from the excitation light generation means.

9. The multi-core fiber amplifier according to claim 1 or 2, further comprising:
third amplification means including a multi-core fiber in which a rare-earth element is added, for amplifying third signal light being the signal light in a third wavelength band; and
third optical demultiplexing means for demultiplexing light being output from the third amplification means into light including the first signal light, the second signal light, and the excitation light, and the third signal light, wherein
the third amplification means and the third optical demultiplexing means are disposed between the first optical multiplexing means and the first amplification means, and
the first optical multiplexing means couples the excitation light with the first signal light, the second signal light, and the third signal light, and outputs coupled light.

10. The multi-core fiber amplifier according to claim 9, wherein
an absorption rate of the excitation light in the third amplification means is equal to or less than an absorption rate of the excitation light in the first amplification means.

11. The multi-core fiber amplifier according to claim 9 or 10, wherein
the third wavelength band is an S-band.

12. An optical amplification method comprising:
by first optical multiplexing means, coupling excitation light having a single wavelength and being used for amplification of signal light with first signal light being the signal light in a first wavelength band and second signal light being the signal light in a second wavelength band, and outputting coupled light;
inputting output light from the first optical multiplexing means to first amplification means including a multi-core fiber in which a rare-earth element is added, and amplifying and outputting at least the first signal light;
by first optical demultiplexing means, demultiplexing output light from the first amplification means into the first signal light, and the second signal light and the excitation light, and outputting demultiplexed light;
inputting the second signal light and the excitation light that are output from the first optical demultiplexing means to second amplification means including a multi-core fiber in which a rare-earth element is added, and amplifying and outputting the input second signal light; and,
by second optical multiplexing means, multiplexing the first signal light being output from the first optical demultiplexing means and the second signal light being output from the second amplification means.

13. The optical amplification method according to claim 12, wherein
an absorption rate of the excitation light in the first amplification means is equal to or less than an absorption rate of the excitation light in the second amplification means.

14. The optical amplification method according to claim 12 or 13, wherein
the first wavelength band is a C-band, and the second wavelength band is an L-band.

15. The optical amplification method according to any one of claims 12 to 14, further comprising
adjusting intensity of the excitation light being input to the second amplification means.
